(19) **Europäisches Patentamt**
**European Patent Office**
**Office européen des brevets**

(11) **EP 1 197 048 B1**

(12) **EUROPÄISCHE PATENTSCHRIFT**

(45) Veröffentlichungstag und Bekanntmachung des Hinweises auf die Patenterteilung:
**29.10.2008 Patentblatt 2008/44**

(51) Int Cl.:
*H04L 25/02* (2006.01) *H04B 1/16* (2006.01)

(21) Anmeldenummer: **00958217.2**

(86) Internationale Anmeldenummer:
**PCT/DE2000/002594**

(22) Anmeldetag: **27.07.2000**

(87) Internationale Veröffentlichungsnummer:
**WO 2001/008363 (01.02.2001 Gazette 2001/05)**

(54) **FUNKEINRICHTUNG MIT ENERGIEEXTRAXTIONSEINRICHTUNG**

RADIO COMMUNICATION DEVICE COMPRISING A POWER EXTRACTION UNIT

DISPOSITIF DE RADIOCOMMUNICATIONS COMPORTANT DES MOYENS D'EXTRACTION D'ENERGIE

(84) Benannte Vertragsstaaten:
**AT BE CH CY DE DK ES FI FR GB GR IE IT LI LU MC NL PT SE**

(30) Priorität: **27.07.1999 DE 19935755**

(43) Veröffentlichungstag der Anmeldung:
**17.04.2002 Patentblatt 2002/16**

(73) Patentinhaber: **SIEMENS AKTIENGESELLSCHAFT 80333 München (DE)**

(72) Erfinder:
• LUFT, Frank-Michael
 D-16341 Schwanebeck (DE)
• LÜTZENKIRCHEN, Thomas
 D-12351 Berlin (DE)

(56) Entgegenhaltungen:
EP-A- 0 827 123 WO-A- 95/34958
US-A- 4 009 341 US-A- 4 677 646

EP 1 197 048 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung bezieht sich auf eine Funkeinrichtung zum Senden von Funksignalen mit einer elektrischen Schnittstelle mit mindestens einem Datenanschluß zum Anschluß der Funkeinrichtung an eine externe Datenquelle und mit einer mit dem mindestens einen Datenanschluß in Verbindung stehenden Sendeeinrichtung, die mit über den mindestens einen Datenanschluß übertragenen Datensignalen der externen Datenquelle die Funksignale erzeugt.

Eine derartige Funkeinrichtung wird als PCMCIA-Karte unter dem Produktnamen "Teledat cordless PCMCIA" von der Deutschen Telekom vertrieben. Diese Karte weist eine PCMCIA-Schnittstelle auf, mit der die Karte an ein Laptop oder Notebook als externe Datenquelle anschließbar ist. Mit mindestens einem Datenanschluß der Schnittstelle steht eine Sendeeinrichtung in Verbindung, die mit über die Schnittstelle übertragenen Datensignalen der externen Datenquelle Funksignale im DECT-Standard erzeugt und diese zu einer entfernt angeordneten DECT-Basisstation sendet; die Schnittstelle der vorbekannten Funkeinrichtung weist zusätzlich zu dem mindestens einen Datenanschluß einen Stromversorgungsanschluß auf, über den die Funkeinrichtung vom Laptop oder Notebook mit Strom versorgt wird. Ferner offenbart die US-A-4677646 eine Sendeeinrichtung, die den Versorgungsstrom aus dem Datensignal gewinnt.

Der Erfindung liegt die Aufgabe zugrunde, eine Funkeinrichtung anzugeben, die auch ohne Stromversorgungsanschluß auskommt und die mit oder ohne separate externe Stromversorgung betrieben werden kann.

Diese Aufgabe wird bei einer Funkeinrichtung der eingangs beschriebenen Art erfindungsgemäß dadurch gelöst, daß die Funkeinrichtung eine Energieextraktionseinrichtung aufweist, die eingangsseitig an den mindestens einen Datenanschluß und ausgangsseitig an einen Stromversorgungseingang der Sendeeinrichtung angeschlossen ist und die aus den Datensignalen der externen Datenquelle Energie entnimmt und diese Energie an dem Stromversorgungseingang in die Sendeeinrichtung zu deren Betrieb einspeist.

Ein wesentlicher Vorteil der erfindungsgemäßen Funkeinrichtung besteht darin, daß diese auch ohne separate Stromversorgung funktionsfähig ist und betrieben werden kann, da sie nämlich eine Energieextraktionseinrichtung aufweist, die aus den Datensignalen der externen Datenquelle Energie entnimmt und diese Energie in die Sendeeinrichtung zu deren Betrieb einspeist; die Erfindung macht sich dabei die Erkenntnis zunutze, daß die Datensignale i. a. mehr Energie enthalten, als für die Sendeeinrichtung tatsächlich erforderlich ist, so daß diese überschüssige Energie zum Betrieb der Funkeinrichtung verwertet werden kann. Ein weiterer Vorteil der erfindungsgemäßen Funkeinrichtung besteht darin, daß diese daher auch keinen separaten Stromversorgungsanschluß für eine externe Stromversorgungseinrichtung aufweisen muß.

Eine besonders vorteilhafte Ausgestaltung der erfindungsgemäßen Funkeinrichtung zeichnet sich dadurch aus, daß die Energieextraktionseinrichtung eingangsseitig eine Gleichrichteinrichtung aufweist, der ein mit dem Stromversorgungseingang der Sendeeinrichtung in Verbindung stehender Energiespeicher nachgeordnet ist. Bei dieser Ausgestaltung der erfindungsgemäßen Funkeinrichtung wird nämlich sichergestellt, daß in der Energieextraktionseinrichtung gespeicherte Energie ausschließlich in Richtung Sendeeinrichtung und niemals in Richtung Schnittstelle aus der Energieextraktionseinrichtung abfließen kann.

Die Gleichrichteinrichtung dieser Energieextraktionseinrichtung läßt sich besonders einfach und damit kostengünstig realisieren, wenn sie eine Diode zur Gleichrichtung enthält.

Da bei einer parallelen Schnittstelle i. a. mehr Datenanschlüsse und damit mehr Datensignale zur Verfügung stehen, deren Energie von der Energieextraktionseinrichtung verwertet werden kann, als bei einer seriellen Schnittstelle, wird es als vorteilhaft angesehen, wenn die Schnittstelle eine parallele Schnittstelle mit mehreren Datenanschlüssen ist. Im übrigen lassen sich bekanntlich über eine parallele Schnittstelle Daten schneller übertragen als über eine serielle Schnittstelle.

Für den Einsatz im Computerbereich hat sich als Schnittstelle die IEEE 1284-Schnittstelle besonders bewährt, so daß es als vorteilhaft angesehen wird, wenn die Schnittstelle eine IEEE 1284-Schnittstelle ist.

Um zu erreichen, daß die erfindungsgemäße Funkeinrichtung auch Sendeleistungen aufweisen kann, die mehr Energie erfordern, als mit der Energieextraktionseinrichtung gewonnen werden kann, wird gemäß einer Weiterbildung der erfindungsgemäßen Funkeinrichtung vorgeschlagen, daß die Sendeeinrichtung einen weiteren Stromversorgungseingang zum Anschluß einer externen Stromversorgungseinrichtung aufweist, und daß die Sendeeinrichtung derart beschaffen ist, daß die von ihr erzeugten Funksignale im Falle ausschließlicher Stromversorgung durch die Energieextraktionseinrichtung eine erste vorgegebene Sendeleistung und bei mit Spannung/Strom beaufschlagtem weiterem Stromversorgungseingang eine die vorgegebene Sendeleistung übersteigende zweite vorgegebene Sendeleistung aufweist.

Zur Erläuterung der Erfindung zeigt

Figur 1 ein Ausführungsbeispiel für eine erfindungsgemäße Funkeinrichtung mit Energieextraktionseinrichtung und

Figur 2 ein Ausführungsbeispiel für die Energieextraktionseinrichtung gemäß Figur 2.

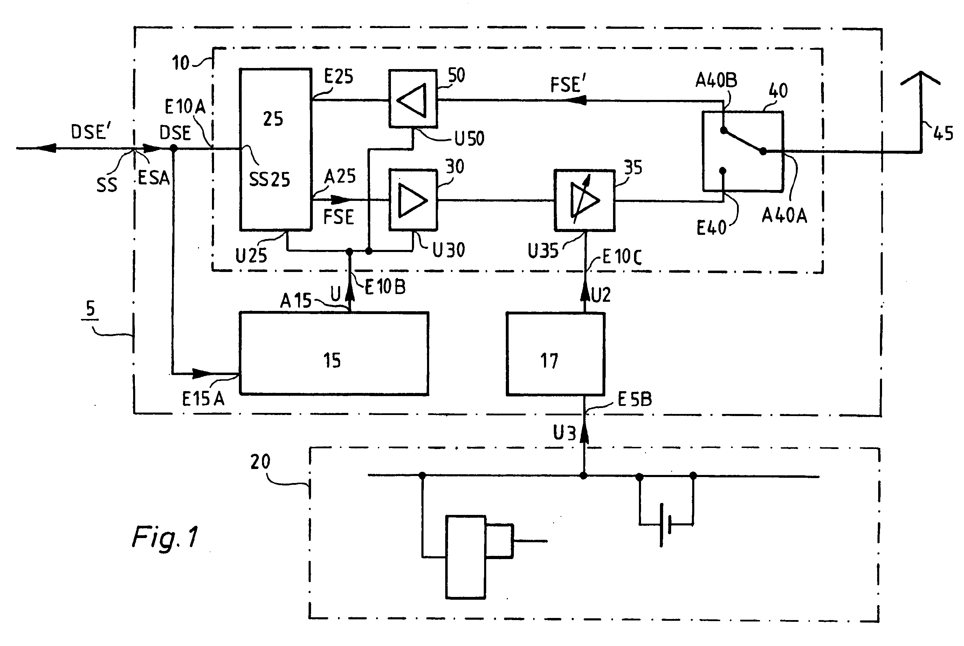

Die Figur 1 zeigte eine Funkeinrichtung 5 zum Senden von Funksignalen FSE mit einer elektrischen Schnittstelle SS in Form einer IEEE 1284 Schnittstelle. In der Figur 1 ist der Übersichtlichkeit halber nur ein einziger Datenanschluß der Schnittstelle SS dargestellt; dieser Datenanschluß trägt in der Figur das Bezugszeichen E5A. Mit dem Datenanschluß E5A bzw. mit der Schnittstelle SS ist ein Dateneingang E10A einer Sendeeinrichtung 10 sowie ein Eingang E15A einer Energieextraktionseinrichtung 15 verbunden. Die Energieextraktionseinrichtung 15 weist einen Ausgang A15 auf, der an einen Stromversorgungseingang E10B der Sendeeinrichtung 10 angeschlossen ist. Ein weiterer Stromversorgungseingang E10C der Sendeeinrichtung 10 ist über eine Anpaßschaltung 17 mit einem Stromversorgungsanschluß E5B der Funkeinrichtung 5 verbunden; an diesem Stromversorgungsanschluß E5B ist der Funkeinrichtung 5 eine Stromversorgungseinrichtung 20 in Form eines Netzteils oder eines Akkus vorgeordnet.

Die Sendeeinrichtung 10 weist eingangsseitig eine Modulationseinrichtung 25 auf, die mit ihrem Schnittstelleneingang SS25 mit dem Dateneingang E10A der Sendeeinrichtung 10 verbunden ist. Ein Ausgang A25 der Modulationseinrichtung 25 ist an einen Ausgangsverstärker 30 angeschlossen, dem ein Leistungsverstärker 35 nachgeordnet ist. Ausgangsseitig steht dieser Leistungsverstärker 35 mit einem Eingang E40 einer Signal-Weiche 40 in Verbindung, der an einem Ausgang A40A eine Antenne 45 zum Senden bzw. zum Empfangen von Funksignalen nachgeordnet ist. Einem weiteren Ausgang A40B der Signal-Weiche 40 ist ein Eingangsverstärker 50 nachgeordnet, dem ein Eingang E25 der Modulationseinrichtung 25 nachgeschaltet ist.

Zur Energieversorgung weisen die Modulationseinrichtung 25, der Eingangsverstärker 50 und der Ausgangsverstärker 30 jeweils einen Stromversorgungseingang auf - Bezugszeichen U25, U30 und U50 -, der mit dem einen Stromversorgungseingang E10B der Sendeeinrichtung 10 und mit dem Ausgang A15 der Energieextraktionseinrichtung 15 verbunden ist. Die Modulationseinrichtung 25 kann beispielsweise eine digitale Modulations-/Demodulationseinrichtung sein, die im DECT-, GSM-, Bluetooth- oder einem anderen vergleichbaren Standard arbeitet; folglich kann die Sendeeinrichtung 20 also eine DECT-, GSM-, Bluetooth- oder vergleichbare Einrichtung sein.

Die erfindungsgemäße Funkeinrichtung 5 wird wie folgt betrieben. Ein über die Schnittstelle SS in die Sendeeinrichtung 10 eingespeistes Datensignal DSE einer nicht dargestellten externen Datenquelle, beispielsweise einem Computer, wird in die Sendeeinrichtung 10 und damit in die Modulationseinrichtung 25 eingespeist. In der Modulationseinrichtung 25 wird das Datensignal DSE in ein Funksignal FSE umgewandelt und zum Verstärker 30 übertragen. In dem Verstärker 30 wird das Funksignal FSE verstärkt und über die Signal-Weiche 40 zur Antenne 45 übertragen, in der das Funksignal FSE abgestrahlt wird; ggf. wird das Funksignal FSE in dem Leistungsverstärker 35 leistungsverstärkt, bevor es abgestrahlt wird. Ob eine Leistungsverstärkung in dem Leistungsverstärker 35 durchgeführt wird oder nicht, hängt davon ab, ob von der Stromversorgungseinrichtung 20 über die Anpaßschaltung 17 eine Betriebsspannung U2 an den Leistungsverstärker 35 angelegt ist; ist dies nicht der Fall, so verhält sich der Leistungsvertärker 35 "transparent" und läßt das Funksignal FSE ungedämpft passieren. Die Anpaßschaltung 17 dient also dazu, eine Ausgangsspannung U3 der Stromversorgungseinrichtung 20 in die für den Leistungsvertärker 35 geeignete Betriebsspannung U2 zu transformieren bzw. zu wandeln.

Die Sendeeinrichtung 10 kann auch als Empfangseinrichtung betrieben werden, so daß sie auch als Sende/Empfangseinrichtung bzw. Sende- und/oder Empfangseinrichtung bezeichnet werden könnte. Wird ein Empfangsfunksignal FSE' über die Antenne 45 empfangen, so gelangt dieses über die Signal-Weiche 40 zu dem weiteren Verstärker 50 und wird dort verstärkt. Anschließend gelangt das Empfangsfunksignal FSE' zu dem Eingang E25 der Modulationseinrichtung 25 und wird dort durch ein geeignetes Demodulationsverfahren demoduliert und in ein Empfangsdatensignal DSE' umgewandelt. Dieses Empfangsdatensignal DSE' wird über die Schnittstelle SS abgegeben.

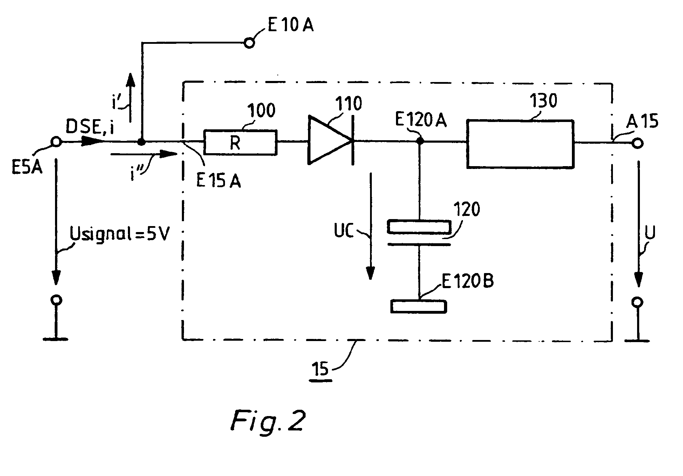

Die Modulationseinrichtung 25 sowie die beiden Verstärker 30 und 50 werden durch die Energieextraktionseinrichtung 15 mit Energie bzw. Versorgungsspannung bzw. -strom versorgt. Dies erfolgt derart, daß die über die Schnittstelle SS übertragenen Datensignale DSE zu der Energieextraktionseinrichtung 15 übertragen werden; dort wird den Datensignalen DSE Energie entzogen, die in Form einer Versorgungsspannung U an den einen Stromversorgungseingang E10B der Sendeeinrichtung 10 und damit an die Modulationseinrichtung 25 und die beiden Verstärker 30 und 50 abgegeben wird. Wie die Energieextraktionseinrichtung 25 aus den Datensignalen DSE die Energie entzieht, wird im Zusammenhang mit der Figur 2 erläutert.

Wie bereits angesprochen, ist an die Sendeeinrichtung 10 die mit der Stromversorgungseinrichtung 20 verbundene Anpaßschaltung 17 angeschlossen, die in den Leistungsverstärker 35 die Betriebsspannung U2 einspeist. Wie bereits erläutert, dient dieser Leistungsverstärker 35 zum Verstärken des bereits in dem einen Verstärker 30 vorverstärkten Funksignals FSE; reicht zum Betrieb der Funkeinrichtung 5 eine geringe Sendeleistung aus, wie sie von dem Ausgangsverstärker 30 geliefert wird, so kann auf den Einsatz bzw. auf den Betrieb des Leistungsverstärkers 35 verzichtet werden. In diesem Falle kann der Leistungsverstärker abgeschaltet werden bzw. auf "Durchlaß" geschaltet werden, indem die Stromversorgungseinrichtung 20 von dem Leistungsverstärker 35 abgeklemmt wird. Die Sendeeinrichtung 10 arbeitet dann ohne externe Stromversorgung und folglich ohne Leistungsverstärkung. Soll hingegen mit einer größeren Ausgangsleistung gesendet werden, als es mit der Energie der Energieextraktionseinrichtung 25 allein möglich ist, so kann durch Anschluß der Stromversorgungseinrichtung 20 an den Leistungsverstärker 35 diese größere Ausgangsleistung erreicht werden.

Im Zusammenhang mit der Figur 2 wird nun anhand eines Beispiels erläutert, wie die Energieextraktionseinrichtung 15 aufgebaut sein kann. An dem Eingang E15A der Energieextraktionseinrichtung 15 ist eine Strombegrenzungseinrichtung in Form eines Widerstands 100 vorgesehen, dem eine Diode 110 als Gleichrichteinrichtung nachgeordnet ist. Der Diode 110 ist ein Kondensator 120 als Energiespeicher nachgeschaltet, an dessen beiden Anschlußklemmen E120A und E120B eine Kondensatorspannung Uc anliegt. Die eine der beiden Anschlußklemmen E120A ist mit einem DC/DC-Wandler 130 verbunden, der die Kondensatorspannung UC in die Versorgungsspannung U für den einen Stromversorgungseingang E10B der Sendeeinrichtung 10 wandelt. Bei dem DC/DC-Wandler 130 kann es sich um einen üblichen, kommerziell erhältlichen Wandler handeln; wesentlich ist bei diesem Wandler lediglich, daß er derart ausgewählt ist, daß er die von der Signalspannung Usignal des Datensignals DSE bzw. vom Spannungspegel der Schnittstelle SS abhängige Kondensatorspannung Uc auf die für den einen Stromversorgungseingang E10B der Sendeeinrichtung 10 geeignete Größe transformiert. U. U. kann auf den DC/DC-Wandler 130 auch verzichtet werden, wenn nämlich die Signalspannung Usignal des Datensignals DSE zu der für die Sendeeinrichtung 10 erforderlichen Versorgungsspannung U paßt; dies ist beispielsweise dann der Fall, wenn das Datensignal DSE und damit die Schnittstelle SS denselben Spannungspegel aufweisen, wie die Sendeeinrichtung 10 als Versorgungsspannung U benötigt.

Nachfolgend soll nun ein Dimensionierungsbeispiel für den Widerstand 100 angegeben werden. Dabei wird davon ausgegangen, daß die Signalspannung Usignal des Datensignals DSE Usignal = 5 V beträgt. Gemäß der Darstellung in der Figur 2 wird der an der Schnittstelle SS bzw. am Eingang E5 in die Funkeinrichtung 5 hineinfließende, das Datensignal DSE tragende Gesamtstrom i in zwei Teilströme i' und i" aufgeteilt. Der eine Teilstrom i' fließt am Eingang E10A in die Sendeeinrichtung 10 hinein und überträgt das Datensignal DSE zur Sendeeinrichtung 10; der andere Teilstrom i" wird in der Energieextraktionseinrichtung 15 verwertet. Damit die Schnittstelle SS nicht überlastet wird, ist sicherzustellen, daß der Gesamtstrom i = i' + i" nicht größer ist als der maximal zulässige Strom imax, der über die Schnittstelle SS bzw. über den Datenanschluß E5A maximal fließen darf. Hierfür ist der Widerstand R vorgesehen, der als Strombegrenzung arbeitet und den Strom entsprechend begrenzt. Geht man beispielsweise von einem maximal zulässigen Strom imax von 20mA und einem in die Sendeeinrichtung 10 fließenden Teilstrom i' von 5mA aus und beträgt die Signalspannung Usignal beispielsweise Usignal = 5V, so ergibt sich für den Widerstand R folgendes:

$$i'' = i - i' = 20mA - 5mA = 15mA$$

$$R = Usignal/ i'' = Usignal/(i-i') = 5V / 15mA = 333 \ \Omega$$

.

Bei diesem Beispiel wird die Schwellspannung der Diode vernachlässigt. Die Kondensatorspannung Uc am Kondensator 120 wird mit 0 V berücksichtigt, da der Kondensator 120 beim Einschalten der Funkeinrichtung 5 i. a. entladenen ist.

Nachdem der andere Teilstrom i" den Widerstand 100 passiert hat, gelangt er über die Diode 110 zu dem nachgeschalteten Kondensator 120 und dem DC/DC-Wandler 130. Die Diode 120 verhindert, daß bei Potentialänderungen - beispielsweise auf Null Volt - an der Schnittstelle SS bzw. am Datenanschluß E5A die im Kondensator 120 gespeicherte Energie aus dem Kondensator 120 über den Datenanschluß E5A bzw. die Schnittstelle SS aus der Funkeinrichtung 5 abfließen bzw. zurückfließen kann.

Der nachgeschaltete DC/DC-Wandler 130 erzeugt aus der Kondensatorspannung Uc die Versorgungsspannung U für die Sendeeinrichtung 10. Der DC/DC-Wandler 130 muß nicht unbedingt in der Energieextraktionseinrichtung 15 integriert sein; beispielsweise kann er auch stromversorgungseingangsseitig in der Sendeeinrichtung 10 vorgesehen sein; dies dürfte üblicherweise bei Funkeinrichtungen wie Mobiltelefonen der Fall sein, da deren Sendeeinrichtungen i. a. entsprechende DC/DC-Wandler zur Aufbereitung von Akkuspannung sowieso aufweisen.

**Patentansprüche**

1.  Funkeinrichtung (5) zum Senden von Funksignalen (FSE)

    - mit einer elektrischen Schnittstelle (SS) mit mindestens einem Datenanschluß (E5A) zum Anschluß der Funkeinrichtung (5) an eine externe Datenquelle und
    - mit einer mit dem mindestens einen Datenanschluß (E5A) in Verbindung stehenden Sendeeinrichtung (10), die

       - mit über den mindestens einen Datenanschluß (E5A) übertragenen Datensignalen (DSE) der externen Datenquelle die Funksignale (FSE) erzeugt,

    **dadurch gekennzeichnet,**

- **dass** die Funkeinrichtung (5) eine Energieextraktionseinrichtung (15) aufweist, die

- eingangsseitig an den mindestens einen Datenanschluß (E5A) und ausgangsseitig an einen Stromversorgungseingang (E10B) der Sendeeinrichtung (10) angeschlossen ist und die
- aus den Datensignalen (DSE) der externen Datenquelle Energie entnimmt und diese Energie an dem Stromversorgungseingang (E10B) in die Sendeeinrichtung zu deren Betrieb einspeist,

- **dass** die Sendeeinrichtung (10) einen weiteren Stromversorgungseingang (E10C) zum Anschluß einer externen Stromversorgungseinrichtung aufweist, und
- **daß** die Sendeeinrichtung (10) derart beschaffen ist, daß die von ihr erzeugten Funksignale (FSE)

- im Falle ausschließlicher Stromversorgung (U) durch die Energieextraktionseinrichtung (15) eine erste vorgegebene Sendeleistung und
- bei mit Spannung/Strom beaufschlagtem weiterem Stromversorgungseingang (E10C) eine die vorgegebene Sendeleistung übersteigende zweite vorgegebene Sendeleistung aufweist.

**2.** Funkeinrichtung nach Anspruch 1,
**dadurch gekennzeichnet, daß**

die Energieextraktionseinrichtung (15) eingangsseitig eine Gleichrichteinrichtung (110) aufweist, der ein mit dem Stromversorgungseingang (E10B) der Sendeeinrichtung (10) in Verbindung stehender Energiespeicher (120) nachgeordnet ist.

**3.** Funkeinrichtung nach Anspruch 2,
**dadurch gekennzeichnet, daß**

- die Gleichrichteinrichtung (110) eine Diode zur Gleichrichtung enthält.

**4.** Funkeinrichtung nach Anspruch 1 , 2 oder 3,
**dadurch gekennzeichnet, daß**

- die Schnittstelle (SS) eine parallele Schnittstelle mit mehreren Datenanschlüssen ist.

**5.** Funkeinrichtung nach Anspruch 4,
**dadurch gekennzeichnet, daß**

- die Schnittstelle (SS) eine IEEE 1284-Schnittstelle ist.

**Claims**

**1.** Radio communication device (5) for sending radio signals (FSE)

- with an electric interface (SS) with at least one data connection (E5A) for connecting the radio communication device (5) to an external data source and
- with a transmitting device (10) in contact with the at least one data connection (E5A), which
- with data signals (DSE) of the external data source transmitting via the at least one data connection (E5A) generates the radio signals (FSE),

**characterised in that,**

- the radio communication device (5) comprises a power extraction device (15), which is connected on the input side to the at least one data connection (E5A) and on the output side to a power supply input (E10B) of the transmitting device (10) and which

- takes power from the data signals (DSE) of the external data source and feeds said power at the power supply input (E10B) into the transmitting device for its operation,
- **in that** the transmitting device (10) comprises a further power supply input (E10C) for connecting an external power supply device, and

- **in that** the transmitting device (10) is set up so that the radio signals (FSE) generated thereby
- in the case of an exclusive power supply (U) through the power extraction device (15) has a first prespecified transmission output and
- with a further power supply input (E10C) charged with voltage/current has a second prespecified transmission output exceeding the prespecified transmission output.

2. Radio communication device according to claim 1, **characterised in that** the power extraction device (15) on the input side has a rectifier (110) after which a power store (120) in connection with the power supply input (E10B) of the transmitting device (10) is arranged.

3. Radio communication device according to claim 2, **characterised in that** the rectifier (110) contains a diode for rectification.

4. Radio communication device according to claim 1, 2 or 3, **characterised in that** the interface (SS) is a parallel interface with several data connections.

5. Radio communication device according to claim 4, **characterised in that** the interface (SS) is an IEEE 1284 interface.

**Revendications**

1. Dispositif de radiocommunications (5) pour envoyer des signaux radio (FSE)

- comportant une interface électrique (SS) avec au moins un port de données (E5A) pour relier le dispositif de radiocommunications (5) à une source de données externes et
- comportant un dispositif d'émission (10) en liaison avec la au moins un port de données (E5A), qui,
- génère les signaux radios (FSE) avec les signaux de données (DSE) de la source de données externe, transmis par l'intermédiaire du au moins un port de données (E5A),
**caractérisé**

- en que le dispositif de radiocommunications (5) présente un dispositif d'extraction d'énergie (15), qui
- côté entrée, est relié à au moins un port de données (E5A) et côté sortie est relié à une entrée d'alimentation en courant (E10B) du dispositif d'émission (10) et qui
- prélève l'énergie des signaux de données (DSE) de la source de données externes et stocke cette énergie dans l'entrée d'alimentation en courant (E10B) dans le dispositif d'émission pour son fonctionnement,
- en ce que le dispositif d'émission (10) présente une autre entrée d'alimentation en courant (E10C) pour la connexion d'un dispositif d'alimentation en courant externe, et
- en ce que le dispositif d'émission (10) est alimenté de sorte que les signaux radio (FSE) générés par celui-ci présentent
- une première puissance d'émission prédéterminée dans le cas d'une alimentation en courant unique (U) grâce au dispositif d'extraction d'énergie (15) et
- une seconde puissance d'émission prédéterminée élevant la puissance d'émission prédéterminée dans l'autre entrée d'alimentation en courant (E10C) alimentée en tension/courant.

2. Dispositif de radiocommunications selon la revendication 1, **caractérisé en ce que** le dispositif d'extraction d'énergie (15) présente côté entrée un dispositif de compensation (110), qui est disposé après le réservoir d'énergie (120) relié à l'entrée d'alimentation en courant (E10B) du dispositif d'émission (10).

3. Dispositif de radiocommunications selon la revendication 2, **caractérisé en ce que** le dispositif de compensation (110) comporte une diode pour la compensation.

4. Dispositif de radiocommunications selon la revendication 1, 2 ou 3, **caractérisé en ce que** l'interface (SS) est une interface parallèle comportant plusieurs connexions de données.

5. Dispositif de radiocommunications selon la revendication 4, **caractérisé en ce que** l'interface (SS) est une interface IEEE 1284.

Fig.1

EP 1 197 048 B1

*Fig. 2*

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4677646 A